# EUROPÄISCHE PATENTSCHRIFT

(11) **EP 1 489 129 B1**
(45) Veröffentlichungstag und Bekanntmachung des Hinweises auf die Patenterteilung: **12.04.2006**
(21) Anmeldenummer: 04013120.3
(22) Anmeldetag: 03.06.2004
(51) Int. Cl.: C08G 77/458, C08G 18/61

(54) **Organopolysiloxan/Polyharnstoff/Polyurethan-Blockcopolymere**
Organopolysiloxane-polyurea-polyurethane block copolymers.
Bloc-copolymères oranopolysiloxane-polyurée-polyuréthane.

(30) Priorität: 12.06.2003 DE 10326575
(43) Veröffentlichungstag der Anmeldung: 22.12.2004
(73) Patentinhaber: Wacker Chemie AG, 81737 München (DE)
(72) Erfinder: Küpfer, Jürgen, Dr., 84547 Emmerting (DE); Schäfer, Oliver, Dr., 81377 München (DE)
(74) Vertreter: Schuderer, Michael

(56) Entgegenhaltungen:
- EP-A- 1 336 683
- EP-B- 0 697 621
- WO-A-95/21206
- WO-A-96/30431
- WO-A-02/077072
- WO-A-03/014194
- WO-A-03/018704

## Beschreibung

Die Erfindung betrifft ein Verfahren zur Herstellung von Organopolysiloxan/Polyharnstoff/Polyurethan-Blockcopolymere sowie die Verwendung der mittels des Verfahrens hergestellten Organopolysiloxan/Polyharnstoff/Polyurethan-Blockcopolymere.

Die Eigenschaften von Polyurethanen und Siliconelastomeren sind in weiten Bereichen komplementär. Polyurethane zeichnen sich durch ihre hervorragende mechanische Festigkeit, Elastizität und eine sehr gute Haftung, Abriebfestigkeit sowie eine einfache Verarbeitung durch Extrusion aus der Schmelze aus. Siliconelastomere dagegen besitzen eine ausgezeichnete Temperatur, UV-, und Bewitterungsstabilität. Dabei behalten sie ihre elastischen Eigenschaften bei tieferen Temperaturen bei und neigen deshalb auch nicht zur Versprödung. Daneben besitzen sie spezielle wasserabweisende und antihaftende Oberflächeneigenschaften.
Herkömmliche Polysiloxane werden für Elastomere, Dichtungen, Kleb- und Dichtstoffe oder Antihaftbeschichtungen in Form thixotroper Pasten angewendet. Um die gewünschten Endfestigkeiten zu erreichen, wurden unterschiedliche Härtungswege der Massen entwickelt, mit dem Ziel, die gewünschten Strukturen zu festigen und die mechanischen Eigenschaften einzustellen. Meist müssen die Polymere aber durch den Zusatz von verstärkend wirkenden Additiven, wie beispielsweise pyrogenen Kieselsäuren abgemischt werden, um ausreichende mechanische Eigenschaften zu erreichen.
Bei den Härtungssystemen unterscheidet man im wesentlichen zwischen Hochtemperatur vulkanisierenden Systemen (HTV) und Raumtemperatur vulkanisierenden Systemen (RTV). Bei den RTV-Massen gibt es sowohl ein- (1K) als auch zweikomponentige (2K) Systeme. In den 2K-Systmen werden die beiden Komponenten gemischt und damit katalytisch aktiviert und ausgehärtet. Der Härtungsmechanismus und der benötigte Katalysator können dabei unterschiedlich sein. Üblicherweise erfolgt die Härtung durch eine peroxidische Vernetzung, durch Hydrosilylierung mittels Platinkatalyse oder z.B. durch Kondensationsreaktionen. Solche 2K-Systeme besitzen zwar sehr lange Topfzeiten, zur Erreichung optimaler Eigenschaften müssen jedoch die Mischungsverhältnisse beider Komponenten genau eingehalten werden, was zu einem erhöhten apparativen Aufwand bei der Verarbeitung führt.
1K-Systeme härten ebenfalls durch eine peroxidische Vernetzung, durch Hydrosilylierung mittels Platinkatalyse oder z.B. durch Kondensationsreaktionen. Hier jedoch ist entweder ein zusätzlicher Verarbeitungsschritt zum Eincompoundieren des Vernetzungskatalysators erforderlich oder die Massen haben nur eine begrenzte Topfzeit. All diesen Systemen ist jedoch gemeinsam, dass die Produkte nach der Verarbeitung unlöslich sind und z.B. auch nicht mehr recycliert werden können.

Daher sollte die Kombination von Urethan- und Silicon-Polymeren Materialien mit guten mechanischen Eigenschaften zugänglich machen, die sich zugleich durch eine gegenüber den Siliconen stark vereinfachten Verarbeitungsmöglichkeiten auszeichnen, jedoch weiterhin die positiven Eigenschaften der Silicone besitzen. Die Kombination der Vorteile beider Systeme kann daher zu Verbindungen mit niedrigen Glastemperaturen, geringen Oberflächenenergien, verbesserten thermischen und photochemischen Stabilitäten, geringer Wasseraufnahme und physiologisch inerten Materialien führen.

Untersuchungen wurden durchgeführt, um die schlechten Phasenverträglichkeiten der beiden Systeme zu überwinden. Durch Herstellung von Polymerblends konnten nur in wenigen speziellen Fällen ausreichende Verträglichkeiten erreicht werden. Erst mit der in I. Yilgör, Polymer, 1984 (25), 1800 und in EP-A-250248 beschriebenen Herstellung von Polydiorganosiloxan-Harnstoffblockcopolymeren konnte dieses Ziel erreicht werden. Die Umsetzung der Polymerbausteine erfolgt letztlich nach einer vergleichsweise einfachen Polyaddition, wie sie für die Herstellung von Polyurethanen angewendet wird. Dabei werden als Ausgangsmaterialien für die Siloxan-Harnstoff-Copolymere als Siloxanbausteine bisaminoalkyl-terminierte Polysiloxane verwendet. Diese bilden die Weichsegmente in den Copolymeren, analog zu den Polyethern in reinen Polyurethansystemen. Als Hartsegmente werden gängige Diisocyanate eingesetzt, wobei diese auch noch durch Zusatz von Diaminen, wie z.B. 1,6-Diaminohexan oder Dihydroxyverbindungen wie z.B. Butandiol zur Erreichung höherer Festigkeiten modifiziert werden können. Die Umsetzung der Bisaminoverbindungen mit Isocyanaten erfolgt dabei spontan und benötigt in aller Regel keinen Katalysator. Die Silicon- und Isocyanat-Polymerbausteine sind in einem weiten Bereich problemlos mischbar. Die mechanischen Eigenschaften werden durch das Verhältnis der unterschiedlichen Polymerblöcke Silicon-Weichsegmente und Harnstoff-Hartsegmente und wesentlich durch das verwendete Diisocyanat bestimmt. Durch die starken Wechselwirkungen der Wasserstoffbrücken zwischen den Harnstoffeinheiten besitzen diese Verbindungen einen definierten Erweichungspunkt und es werden thermoplastische Materialien erhalten.

Sowohl bei Yilgör et al. als auch in EP 0 250 248 A2 werden die als Edukt verwendeten bisaminoalkylfunktionelle Siloxane über Äquilibrierungsreaktionen hergestellt. Dabei wird in EP 0 250 248 A2 beschrieben, dass ausschließlich über eine mit speziellen Äquilibrierungskatalysatoren besonders sorgfältig durchgeführte Äquilibrierungsreaktion bisaminoalkylterminierte Polydimethylsiloxan-Ketten erhalten werden, die auch in höheren Molekulargewichtsbereichen eine ausreichende Reinheit besitzen, um bei der Reaktion mit Diisocyanaten die für gute mechanische Eigenschaften der Endpolymere erforderlichen hohen Molekulargewichte sicherzustellen.

Über Äquilibrierungsreaktionen hergestellte difunktionelle Siliconöle haben jedoch mehrere Nachteile:
Die in EP 0 250 248 A2 beschriebene Äquilibrierungsreaktion ist eine sehr langwierige Reaktion, bei der außerdem ein sehr teures Edukt wie Bisaminopropyltetramethyldisiloxan und spezielle Katalysatoren verwendet werden müssen, welche extra synthetisiert werden müssen. Dies ist aus ökonomischer Sicht ungünstig. Weiterhin muss am Ende der Äquilibrierungsreaktion der Katalysator entweder thermisch deaktiviert oder neutralisiert werden, was zu Katalysatorresten und somit Verunreinigungen im Endprodukt führt, die negative Auswirkungen auf die thermische Beständigkeit der so hergestellten Materialien haben. Diese Verunreinigungen sind ebenfalls für einen starken Eigengeruch der daraus synthetisierten Materialien verantwortlich. Weiterhin müssen noch ca. 15 % Siloxancyclen entfernt werden, was aber in der Regel technisch nicht vollständig möglich ist, so dass solche Siloxancyclen im Produkt verbleiben und aus Folgeprodukten ausschwitzen. Während - der thermischen Behandlung neigen die so hergestellten Siliconöle dazu, einen deutlich sichtbaren Gelbstich anzunehmen.

Aus DE 101 37 855 A1 ist bekannt, die zur Herstellung der Siloxan-Harnstoff-Copolymere verwendeten Bisaminoalkylterminierten Siloxane durch die Reaktion von OH-terminierten Siloxanen mit speziellen reaktiven Aminosilanen herzustellen. Dabei werden Materialien mit erhöhter Reinheit erhalten, die sich durch ein vereinfachtes Herstellverfahren, gute mechanische und optische Eigenschaften auszeichnen. Nachteilig hier ist jedoch ebenfalls die separate Herstellung eines Bisaminosilicons aus getrennten Edukten. Dies kann gegebenenfalls verunreinigt werden oder auch durch Carbamatbildung vergelen oder durch Sauerstoffeinfluss vergilben.

WO 02/077072 A1 und WO 03/018704 A1 beschreiben die Herstellung silanterminierter Polyorganosiloxan-Harnstoff-Urethan-Copolymere. WO 03/014194 A1 und EP 1 336 683 A1 beschreiben die Herstellung von Organopolysiloxan/Polyharnstoff/-Polyurethan-Blockcopolymeren. Bei allen vier Herstellungsverfahren handelt es sich um Stufenreaktionen mit den oben ausgeführten Nachteilen. Alle vier Verfahren weisen dabei die Herstellung von Aminoalkylpolysiloxanen als Zwischenstufe auf.

Aufgabe dieser Erfindung war es, ein Verfahren zur Verfügung zu stellen, welches verunreinigungsfreie Siloxan-Harnstoff-Copolymeren, die hohe Molekulargewichte und dadurch bedingt günstige zugänglich macht mechanische Eigenschaften wie beispielsweise hohe Reißfestigkeiten und Reißdehnungen aufweisen und gute Verarbeitungseigenschaften, wie beispielsweise niedrige Viskosität und Lösungsmittelfreiheit zeigen. Zusätzlich sollte dieses Verfahren möglichst ohne größeren technischen Aufwand zu realisieren sein und die Materialien aus einfach zugänglichen Edukten herstellen können, um mit bereits bestehenden Systemen auch in ökonomischer Hinsicht konkurrieren zu können. Durch den Verzicht auf Zwischenprodukte soll dabei der technische Aufwand und die Möglichkeit eventueller Verunreinigung bzw. Abweichungen von Verfahrensparametern minimiert werden.

Gegenstand der Erfindung ist ein Verfahren zur Herstellung von Organopolysiloxan/Polyharnstoff/Polyurethan-Blockcopolymeren der allgemeinen Formel (1): 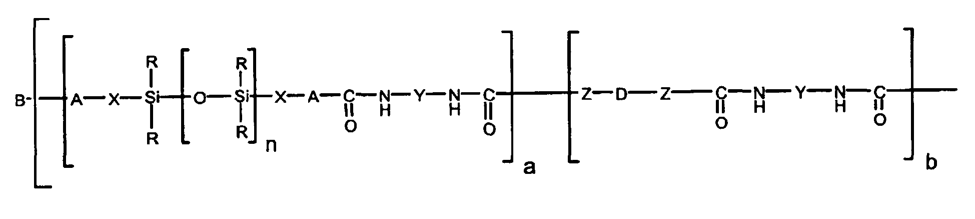 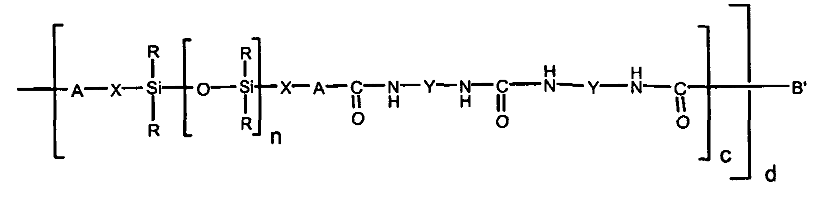 dadurch gekennzeichnet, dass
eine Verbindung, die eine Aminosilan-Struktur der allgemeinen Formel (2) enthält: 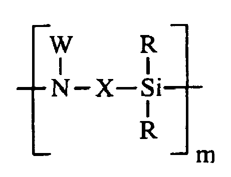 mit einer siliziumorganischen Verbindung der allgemeinen Formel (3),

**(HO)(R**_{**2**}**SiO)**_{**n-1**}**[H]**

und mindestens einem Diisocyanat der allgemeinen Formel (4)

**OCN-Y-NCO,**

wobei
- **R**: einen einwertigen, gegebenenfalls durch Fluor oder Chlor substituierten Kohlenwasserstoffrest mit 1 bis 20 Kohlenstoffatomen,
- **X**: einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
- **A**: ein Sauerstoffatom oder eine Aminogruppe -NR'-,
- **Z**: ein Sauerstoffatom oder eine Aminogruppe -NR'-,
- **R'**: Wasserstoff, einen Alkylrest mit 1 bis 10 Kohlenstoffatomen oder einen Arylrest mit 6 bis 22 Kohlenstoffatomen,
- **Y**: einen zweiwertigen, gegebenenfalls durch Fluor oder Chlor substituierten Kohlenwasserstoffrest mit 1 bis 20 Kohlenstoffatomen,
- **W**: Wasserstoff, einen substituierten oder unsubstituierten Kohlenwasserstoffrest oder einen R₂Si-X-NH₂-Rest darstellt,
- **D**: einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, oder Arylenrest mit 6 bis 22 Kohlenstoffatomen,
- **B, B'**: unanhängig von einander eine reaktive oder nicht reaktive Endgruppe, welche kovalent an das Polymer gebunden ist,
- **n**: eine Zahl von 1 bis 4000,
- **m**: eine Zahl von 1 bis 4000,
- **a**: eine Zahl von mindestens 1,
- **b**: eine Zahl von 0 bis 40,
- **c**: eine Zahl von 0 bis 30 und
- **d**: eine Zahl größer 0 bedeuten,
in einem einstufigen Reaktionsverlauf polymerisiert wird.

Das erfindungsgemäße Verfahren hat gegenüber den aus dem Stand der Technik bekannten Verfahren den Vorteil, dass kein Zwischenprodukt isoliert oder weiterführend aufgereinigt werden muss. Weiterhin entfällt die gemäß EP 0 250 248 A1 notwendige Äquilibrierungsreaktion der Edukte, wodurch das Verfahren deutlich beschleunigt werden kann. Zusätzlich kann auf die für die Äquilibrierungsreaktion notwendigen kostenintensiven Katalysatoren verzichtet werden. Dies führt zu Produkten, die mittels des erfindungsgemäßen Verfahrens erstmals erhalten werden können, die vergleichsweise in Gegensatz zu Produkten, die mittels Verfahren gemäß des Stands der Technik erhalten wurden, keine Katalysatorreste aufweisen und somit thermisch beständiger sein sowie einen geringeren Eigengeruch aufweisen können. Da nach dem erfindungsgemäßen Verfahren keine Siloxancyclen entfernt werden müssen, weisen die entsprechend erhaltenen Blockcopolymere in der Regel eine geringere Tendenz auf, einen Gelbstich anzunehmen.

Idealerweise werden die Silane der allgemeinen Formel (2) und die Silanol-Gruppen enthaltenden Edukte und Polyisocyanate in äquimolaren Verhältnissen eingesetzt, da so maximale Molekulargewichte realisiert werden können. Hierzu wird vorzugsweise der Gehalt an aktivem H im Silanol terminiertem Edukt beispielsweise durch Titration bestimmt, um so eine zumindest äquimolare Menge an Heterocyclen zugeben zu können. Man kann jedoch zur Erzielung besonderer Effekte oder Molekulargewichte eine oder mehrere der drei Komponenten im Über- bzw. Unterschuss in den Reaktor hinzugeben.

Vorzugsweise bedeutet **R** einen einwertigen, Kohlenwasserstoffrest mit 1 bis 6 Kohlenstoffatomen, insbesondere nicht substituiert. Besonders bevorzugte Reste **R** sind Methyl, Ethyl, Vinyl und Phenyl.

Vorzugsweise bedeutet **X** einen Alkylen-Rest mit 2 bis 10 Kohlenstoffatomen. Vorzugsweise ist der Alkylen-Rest **X** nicht unterbrochen.

Vorzugsweise bedeutet **A** eine NH-Gruppe.

Vorzugsweise bedeutet **Z** ein Sauerstoffatom oder eine NH-Gruppe. Vorzugsweise bedeutet **Y** einen Kohlenwasserstoffrest mit 3 bis 13 Kohlenstoffatomen, der vorzugsweise nicht substituiert ist. Vorzugsweise bedeutet **Y** einen Aralkylen-, linearen oder cyclischen Alkylen-Rest.

Vorzugsweise bedeutet **D** einen Alkylenrest mit mindestens 2, insbesondere mindestens 4 Kohlenstoffatomen und höchstens 12 Kohlenstoffatomen. Ebenfalls vorzugsweise bedeutet **D** einen Polyoxyalkylenrest, insbesondere Polyoxyethylenrest oder Polyoxypropylenrest mit mindestens 20, insbesondere mindestens 100 Kohlenstoffatomen und höchstens 800, insbesondere höchstens 200 Kohlenstoffatomen. Vorzugsweise ist der Rest **D** nicht substituiert.

**B** bedeutet vorzugsweise einen funktionellen oder nichtfunktionellen organischen oder siliziumorganischen Rest. Beispielsweise bedeutet **B** eine Organosilylgruppe, wie beispielsweise Alkylsilyl-, Alkoxysilyl- oder Oximosilyl-Gruppe, insbesondere mit 1 bis 4 Kohlenstoffatomen, wie beispielsweise Methoxy- oder Ethoxysilyl-Gruppe, ein Wasserstoff, eine Acylgruppe, die über kovalente Bindungen mit dem Polymer verbunden sind. **B** kann weiterhin einen radikalisch oder ionisch polymerisierbaren Rest, wie beispielsweise ein Vinyl-, Acryl-, Methacryl-, Acylamid- oder Methacrylamidrest, oder auch einen Epoxidrest, wie beispielsweise Propylenoxidrest, bedeuten. Weiterhin kann **B** eine gegebenenfalls substituierte Alkylgruppe mit vorzugsweise 1 bis 20 Kohlenstoffatomen, eine gegebenenfalls substituierte Arylgruppe mit vorzugsweise 6 bis 22 Kohlenstoffatomen oder Alkylarylgruppe, welche substituiert oder unsubstituiert sein kann, bedeuten. Besonders bevorzugt ist **B** eine Methoxysilylgruppe, Ethoxysilylgruppe, ein Wasserstoff, eine Aminoalkylgruppe oder eine Isocyanat enthaltende Gruppe. Weiterhin können die Reste **A** und **B** einen Isocyanatrest bilden.

**B'** bedeutet vorzugsweise einen funktionellen oder nichtfunktionellen organischen oder siliziumorganischen Rest. Beispielsweise bedeutet **B'** eine Organosilylgruppe, ein Wasserstoff, eine Aminoalkylgruppe, eine Hydroxygruppe oder eine NCO-Gruppe, die über kovalente Bindungen mit dem Polymer verbunden sind. **B'** kann weiterhin einen radikalisch oder ionisch polymerisierbaren Rest, wie beispielsweise ein Vinyl-, Acryl-, Methacryl-, Acylamid- oder Methacrylamidrest, oder auch einen Epoxidrest, wie beispielsweise Propylenoxidrest, bedeuten. Weiterhin kann **B'** eine gegebenenfalls substituierte Alkylgruppe mit vorzugsweise 1 bis 20 Kohlenstoffatomen, eine gegebenenfalls substituierte Arylgruppe mit vorzugsweise 6 bis 22 Kohlenstoffatomen oder Alkylarylgruppe, welche substituiert oder unsubstituiert sein kann, bedeuten. Besonders bevorzugt ist **B'** eine Methoxysilylgruppe, Ethoxysilylgruppe, ein Wasserstoff, eine Aminoalkylgruppe, eine Hydroxygruppe oder eine Isocyanat enthaltende Gruppe.

**n** bedeutet vorzugsweise eine Zahl von mindestens 3, insbesondere mindestens 25 und vorzugsweise höchstens 800, insbesondere höchstens 400, besonders bevorzugt höchstens 250.

**m** bedeutet vorzugsweise eine Zahl von 1.

Vorzugsweise bedeutet **a** eine Zahl von höchstens 50.

Wenn **b** ungleich 0, bedeutet **b** vorzugsweise eine Zahl von höchstens 50, insbesondere höchstens 25.

**c** bedeutet vorzugsweise eine Zahl von höchstens 10, insbesondere höchstens 5.

Die Verbindungen, welche ein Aminosilan-Element der allgemeinen Formel (2) enthalten, können entweder linear oder cyclische Verbindungen sein, niedermolekulare oder polymere Verbindungen oder auch Alkoxysilane oder Silazane. Exemplarische Beispiele sind:
H₃C-O-Si(CH₃)₂-CH₂-NH₂, H₃C-H₂C-O-Si(CH₃)₂-CH₂-NH₂ H₃C-O-Si(CH₃)₂-CH₂-NH(C₆H₁₁), H₃C-H₂C-O-Si(CH₃)₂-CH₂-NH(C₆H₁₁), H₃C-O-Si(CH₃)₂-(CH₂)₃-NH₂, H₃C-H₂C-O-Si(CH₃)₂-(CH₂)₃-NH₂, H₃C-O-Si(CH₃)₂-(CH₂)₃-NH(C₆H₁₁), H₃C-H₂C-O-Si(CH₃)₂-(CH₂)₃-NH(C₆H₁₁),

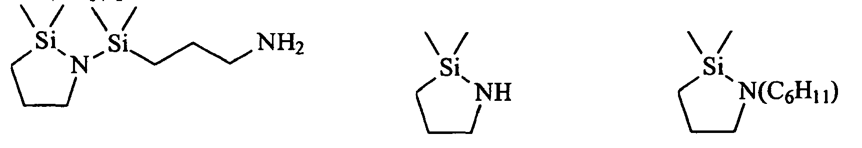

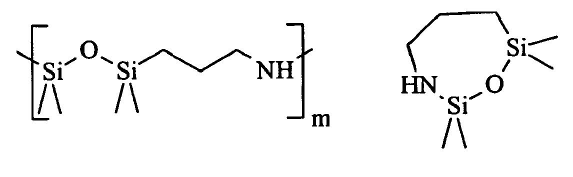

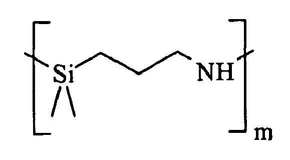

Dabei sind aus Reaktivitätsgründen entweder Silazane oder Aminomethylalkoxysilane bevorzugt.

Das Polydiorganosiloxan-Harnstoff-Copolymer der allgemeinen Formel (1) zeigt hohe Molekulargewichte und gute mechanische Eigenschaften bei guten Verarbeitungseigenschaften.

Vor allem durch den Einsatz von Kettenverlängerern, wie beispielsweise Dihydroxyverbindungen oder Wasser zusätzlich zu den Harnstoffgruppen, kann eine deutliche Verbesserung der mechanischen Eigenschaften erreicht werden. So können Materialien erhalten werden, die in den mechanischen Eigenschaften mit herkömmlichen Siliconkautschuken durchaus vergleichbar sind, jedoch eine erhöhte Transparenz aufweisen und in die kein zusätzlicher aktiver Füllstoff eingearbeitet werden muss.

Falls **b** mindestens 1 ist, kann im zweiten Schritt bis zu 95 Gewichtsprozent, bezogen auf alle eingesetzten Komponenten, an Kettenverlängerern, die ausgewählt werden aus der Gruppe enthaltend organische Diamine, Isocyanat-geblockte Hydroxyverbindungen, Dihydroxyverbindungen oder Mischungen davon, eingesetzt werden.

Vorzugsweise weisen die Kettenverlängerer die allgemeine Formel (6)

HZ-D-ZH,

auf, wobei **D** und **Z** die vorstehenden Bedeutungen aufweisen. Falls **Z** die Bedeutung Sauerstoff hat, kann der Kettenverlängerer der allgemeinen Formel (6) auch vor der Umsetzung im zweiten Schritt mit Diisocyanat der allgemeinen Formel (5) umgesetzt werden.

Vorzugsweise sind im Copolymer der allgemeinen Formel (1), bezogen auf die Summe der Urethan- und Harnstoffgruppen, mindestens 50 Mol-%, besonders bevorzugt mindestens 75 Mol-% Harnstoffgruppen enthalten.

Beispiele für die zu verwendenden Diisocyanate der allgemeinen Formel (5) sind aliphatische Verbindungen wie Isophorondiiscyanat, Hexamethylen-1,6-diisocyanat, Tetramethylen-1,4-diisocyanat und Methylendicyclohexy-4,4'-diisocyanat oder aromatische Verbindungen wie Methylendiphenyl-4,4'-diisocyanat, 2,4-Toluoldiisocyanat, 2,5-Toluoldiisocyanat, 2,6-Toluoldiisocyanat, m-Phenylendiisocyanat, p-Phenylendiisocyanat, m-Xyloldiisocyanat, Tetramethyl-m-xyloldiisocyanat oder Mischungen dieser Isocyanate. Ein Beispiel für kommerziell erhältliche Verbindungen sind die Diisocyanate der DESMODUR®-Reihe (H,I,M,T,W) der Bayer AG, Deutschland. Bevorzugt sind aliphatische Diisocyanate, bei denen **Y** ein Alkylenrest ist, da diese zu Materialien führen, die verbesserte UV-Stabilitäten zeigen, welche bei einer Außenanwendung der Polymere von Vorteil ist.

Die α,ω-OH-terminierten Alkylene der allgemeinen Formel (6) sind bevorzugt Polyalkylene oder Polyoxyalkylene. Diese sind vorzugsweise weitgehend frei von Kontaminationen aus mono-, tri- oder höherfunktionellen Polyoxyalkylenen. Hierbei können Polyetherpolyole, Polytetramethylendiole, Polyesterpolyole, Polycaprolactondiole aber auch α,ω-OH-terminierte Polyalkylene auf Basis von Polyvinylacetat, Polyvinylacetatethylencopolymere, Polyvinylchloridcopolymer, Polyisobutlydiole eingesetzt werden. Bevorzugt werden dabei Polyoxyalkyle verwendet, besonders bevorzugt Polypropylenglykole. Derartige Verbindungen sind als Basismaterialien unter anderem für Polyurethan-Weichschäume und für Beschichtungsanwendungen kommerziell mit Molekularmassen Mn bis über 10 000 erhältlich. Beispiele hierfür sind die BAYCOLL® Polyetherpolyole und Polyesterpolyole der Bayer AG, Deutschland oder die Acclaim® Polyetherpolyole der Lyondell Inc., USA. Es können auch monomere α,ω-Alkylendiole, wie Ethylenglykol, Propandiol, Butandiol oder Hexandiol eingesetzt werden. Weiterhin sind als Dihydroxyverbindungen im Sinne der Erfindung ebenfalls Bishydroxyalkylsilicone zu verstehen, wie sie beispielsweise von der Firma Goldschmidt unter dem Namen Tegomer H-Si 2111, 2311 und 2711 vertrieben werden.

Der Wassergehalt der gewählten Bishydroxyalkylsilicone liegt bevorzugt unter 1 Gew.-% und ganz besonders bevorzugt unter 0.1 Gew.-%.

Die Herstellung der oben beschriebenen Copolymere der allgemeinen Formel (1) kann sowohl in Lösung als auch in Festsubstanz, kontinuierlich oder diskontinuierlich erfolgen. Wesentlich dabei ist, dass für die gewählte Polymermischung unter den Reaktionsbedingungen eine optimale und homogene Durchmischung der Bestandteile erfolgt und eine Phasenunverträglichkeit gegebenenfalls durch Lösungsvermittler verhindert wird. Die Herstellung hängt dabei vom verwendeten Lösungsmittel ab. Ist der Anteil der Hartsegmente wie Urethan- oder Harnstoffeinheiten groß, so muss gegebenenfalls ein Lösungsmittel mit einem hohen Löslichkeitsparameter, wie beispielsweise Dimethylacetamid, gewählt werden. Für die meisten Synthesen hat sich auch Tetrahydrofuran (THF) als ausreichend gut geeignet erwiesen.

Vorzugsweise werden alle Bestandteile in einem inerten Lösungsmittel gelöst. Die Reaktion erfolgt durch Mischen der eingesetzten Komponenten in Form eines einstufigen Reaktionsablaufes.

In einer weiteren bevorzugten Ausführungsform wird das erfindungsgemäße Verfahren ohne die Zugabe von Lösungsmitteln durchgeführt.

Für die Reaktion ohne Lösungsmittel ist die Homogenisierung der Mischung von entscheidender Bedeutung bei der Umsetzung.

Das erfindungsgemäße Verfahren zur Herstellung der Copolymere erfolgt vorzugsweise unter Ausschluss von Feuchtigkeit und unter Schutzgas, wie beispielsweise Stickstoff oder Argon, um für eine bessere Reproduzierbarkeit Sorge zu tragen.

Die Umsetzung erfolgt vorzugsweise, wie bei der Herstellung von Polyurethanen üblich, durch Zugabe eines Katalysators. Geeignete Katalysatoren für die Herstellung sind Dialkylzinnverbindungen, wie beispielsweise Dibutylzinndilaurat, Dibutylzinndiacetat, oder tertiäre Amine wie beispielsweise N,N-Dimethylcyclohexanamin, 2-Dimethylaminoethanol, 4-Dimethylaminopyridin.

Bevorzugte Anwendungen der Organopolysiloxan/Polyharnstoff/Polyurethan-Blockcopolymeren der allgemeinen Formel (1) sind Verwendungen als Bestandteil in Kleb- und Dichtstoffen, als Basisstoff für thermoplastische Elastomere wie beispielsweise Kabelumhüllungen, Schläuche, Dichtungen, Tastaturmatten, für Membranen, wie selektiv gasdurchlässige Membranen, als Zusatzstoffe in Polymerblends, oder für Beschichtungsanwendungen z.B. in Antihaftbeschichtungen, gewebeverträglichen Überzügen, flammgehemmten Überzügen und als biokompatible Materialien. Weitere Anwendungsmöglichkeiten sind Dichtstoffe, Additive für die Polymerverarbeitung, anti-fouling Überzüge, Kosmetika, Körperpflegemittel, Lackadditive, Hilfsstoff in Waschmitteln und Textilbearbeitung, zum Modifizieren von Harzen oder zur Bitumenmodifizierung.

Weiterhin ist der Einsatz dieser thermoplastischen Materialien in vielen Anwendungen möglich, wie beispielsweise in Dichtmassen, Klebstoffen, als Material für Fasern, als Kunststoffadditiv z.B. als Schlagzähverbesserer oder Flammschutzmittel, als Material für Entschäumerformulierungen, als Hochleistungspolymer (Thermoplast, thermoplastisches Elastomer, Elastomer), als Verpackungsmaterial für elektronische Bauteile, in Isolations- oder Abschirmungsmaterialien, in Kabelummantelungen, in Antifoulingmaterialien, als Additiv für Putz-, Reinigungs- oder Pflegemittel, als Additiv für Körperpflegemittel, als Beschichtungsmaterial für Holz, Papier und Pappe, als Formentrennmittel, als biokompatibles Material in medizinischen Anwendungen wie Kontaktlinsen, als Beschichtungsmaterial für Textilfasern oder textile Gewebe, als Beschichtungsmaterial für Naturstoffe wie beispielsweise Leder und Pelze, als Material für Membranen und als Material für photoaktive Systeme beispielsweise für lithographische Verfahren, optische Datensicherung oder optische Datenübertragung, als Additiv zur Verbesserung der Mechanischen Eigenschaften von Polymeren wie beispielsweise Kratzfestigkeit oder Reißfestigkeiten oder als Extrusionshilfsmittel bei der Verarbeitung von thermoplastischen Kunststoffen.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke 0,10 MPa (abs.). Alle Viskositäten wurden bei 20°C bestimmt. Die Molekularmassen wurden mittels GPC in Toluol (0,5 ml/min) bei 23°C bestimmt(Säule: PLgel Mixed C + PLgel 100 A, Detektor: RI ERC7515).

### Beispiel 1 (nicht erfindungsgemäß)

In einem 2.000 ml-Kolben mit Tropftrichter und Rückflusskühler wurden 1.500 g Bishydroxy-terminiertes Polydimethylsiloxan (Molgewicht 3.000 g/mol) vorgelegt. Anschließend wurde bei Raumtemperatur 116 g 1-(3-Aminopropyl-1,1-dimethylsilyl)-2,2-dimethyl-1-aza-2-sila-cyclopentan zugetropft und danach 2 Stunden stehen gelassen. Man erhielt so ein Bisaminopropyl-terminiertes Polydimethylsiloxan mit einem Molekulargewicht von 3.200 g/mol, das gemäß ²⁹Si-NMR frei von Si-OH-Gruppen war.

### Beispiel 2 (nicht erfindungsgemäß)

In einem 2.000 ml-Kolben mit Tropftrichter und Rückflusskühler wurden 1.080 g Bishydroxy-terminiertes Polydimethylsiloxan (Molgewicht 10.800 g/mol) vorgelegt. Anschließend wurde bei einer Temperatur von 60°C 23,2 g 1-(3-Aminopropyl-1,1-dimethylsilyl)-2,2-dimethyl-1-aza-2-sila-cyclopentan zugetropft und danach 5 Stunden bei 60°C gerührt. Nach dem Abkühlen wurde ein Bisaminopropyl-terminiertes Polydimethylsiloxan mit einem Molekulargewicht von 11.000 g/mol, das gemäß ²⁹Si-NMR frei von Si-OH-Gruppen war, erhalten.

### Beispiel 3 (nicht erfindungsgemäß)

In einem 250 ml-Kolben mit Tropftrichter und Rückflusskühler wurden 32 g Bisaminopropyl-terminiertes Polydimethylsiloxan aus Versuch 1 (Molgewicht 3.200 g/mol) in einem Lösungsmittelgemisch aus 80 ml trockenem THF und 20 ml Dimethylacetamid vorgelegt. Anschließend wurde bei Raumtemperatur eine Lösung von 2,22 g Isophorondiisocyanat in 20 ml trockenem THF zugetropft und danach 1 Stunde unter Rückfluss gekocht. Nach dem Abkühlen der Lösung wurde das Polymer durch Eintropfen in Hexan ausgefällt.
Man erhielt ein Copolymer mit einem Molekulargewicht von Mw 132.000 g/mol, welches in der Thermomechanischen Analyse (TMA) einen Erweichungsbereich bei 94°C zeigte.

### Beispiel 4 (nicht erfindungsgemäß) :

In einem Zweiwellenkneter der Firma Collin, Ebersberg, mit 4 Heizzonen wurde unter Stickstoffatmosphäre in der ersten Heizzone das Diisocyanat und in der zweiten Heizzone das Bisaminopropyl-terminierte Polydimethylsiloxan dosiert. Das Temperaturprofil der Heizzonen war wie folgt programmiert: Zone 1: 30°C, Zone 2: 100°C, Zone 3: 150°C, Zone 4: 140°C. Die Drehzahl betrug 50 U/min. Das Diisocyanat (Methylen-bis-(4-Isocyanatocyclohexan)) wurde in Zone 1 mit 304 mg/min dosiert und das Bisaminopropyl-terminiertes Polydimethylsiloxan (Molgewicht 3.200 g/mol) wurde in Zone 2 mit 3,5 g/min dosiert. An der Düse des Extruders konnte ein Polydimethylsiloxanpolyharnstoff-Blockcopolymer mit einem Molgewicht von Mw 110.000 g/mol und einer Erweichungstemperatur von 126°C abgenommen werden.

### Beispiel 5 (erfindungsgemäß)

In einem 250 ml-Kolben mit Tropftrichter und Rückflusskühler wurden 30 g Bishydroxy-terminiertes Polydimethylsiloxan aus Versuch 1 (Molgewicht 3.000 g/mol)und 2,3 g 1-(3-Aminopropyl-1,1-dimethylsilyl)-2,2-dimethyl-1-aza-2-sila-cyclopentan in einem Lösungsmittelgemisch aus 80 ml trockenem Toluol und 20 ml Dimethylacetamid vorgelegt. Anschließend wurde bei Raumtemperatur eine Lösung von 22,2 g Isophorondiisocyanat in 20 ml trockenem Toluol zugetropft und danach 1 Stunde unter Rückfluss gekocht. Nach dem Abkühlen der Lösung wurde das Polymer durch Eintropfen in Hexan ausgefällt. Man erhielt ein Copolymer mit einem Molekulargewicht von Mw 114.000 g/mol, welches in der TMA einen Erweichungsbereich bei 97°C zeigte.

### Beispiel 6 (erfindungsgemäß) :

In einem Zweiwellenkneter der Firma Collin, Ebersberg, mit 7 Heizzonen wurde unter Stickstoffatmosphäre in der ersten Heizzone das 1-(3-Aminopropyl-1,1-dimethylsilyl)-2,2-dimethyl-1-aza-2-sila-cyclopentan und das Bishydroxy-terminierte Polydimethylsiloxan dosiert und in der zweiten Heizzone das Diisocyanat dosiert. Das Temperaturprofil der Heizzonen war wie folgt programmiert: Zone 1: 30°C, Zone 2: 100°C, Zone 3: 160°C, Zone 4: 180°C, Zone 5: 180°C, Zone 6: 140°C, Zone 7: 130°C. Die Drehzahl betrug 50 u/min. Das Diisocyanat (Methylen-bis-(4-Isocyanatocyclohexan)) wurde in Zone 2 mit 888 mg/min dosiert, das Bishydroxy-terminierte Polydimethylsiloxan (Molgewicht 3.000 g/mol) wurde in Zone 1 mit 12,0 g/min dosiert und das Silan wurde in Zone 1 mit 920 mg/min dosiert. An der Düse des Extruders konnte ein Polydimethylsiloxan-Polyharnstoff-Blockcopolymer mit einem Molekulargewicht von Mw 125.000 g/mol und einer Erweichungstemperatur von 126°C abgenommen werden.

## Patentansprüche

1. Verfahren zur Herstellung von Organopolysiloxan/Polyharnstoff/Polyurethan-Blockcopolymeren der allgemeinen Formel (1): 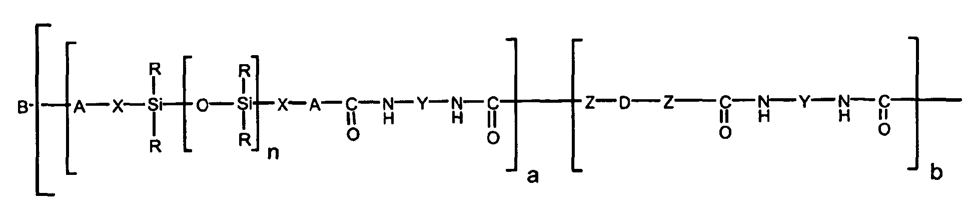 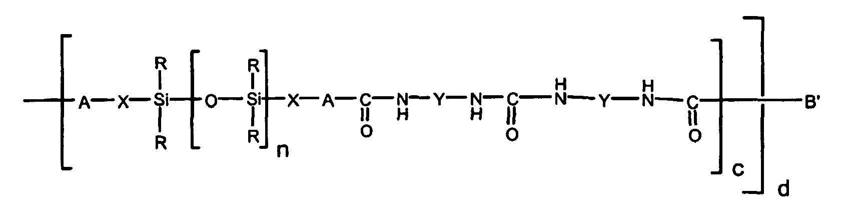 **dadurch gekennzeichnet, dass**
eine Verbindung, die eine Aminosilan-Struktur der allgemeinen Formel (2) enthält: 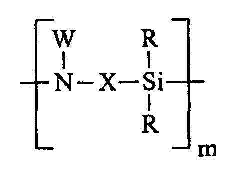 mit einer siliziumorganischen Verbindung der allgemeinen Formel (3),
**(HO)(R**_{**2**}**SiO)**_{**n-1**}**[H]**
und mindestens einem Diisocyanat der allgemeinen Formel (4)
**OCN-Y-NCO,**
wobei
**R** einen einwertigen, gegebenenfalls durch Fluor oder Chlor substituierten Kohlenwasserstoffrest mit 1 bis 20 Kohlenstoffatomen,
**X** einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
**A** ein Sauerstoffatom oder eine Aminogruppe -NR'-,
**Z** ein Sauerstoffatom oder eine Aminogruppe -NR'-,
**R'** Wasserstoff, einen Alkylrest mit 1 bis 10 Kohlenstoffatomen oder einen Arylrest mit 6 bis 22 Kohlenstoffatomen,
**Y** einen zweiwertigen, gegebenenfalls durch Fluor oder Chlor substituierten Kohlenwasserstoffrest mit 1 bis 20 Kohlenstoffatomen,
**W** Wasserstoff, einen substituierten oder unsubstituierten Kohlenwasserstoffrest oder einen R₂Si-X-NH₂-Rest darstellt,
**D** einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, oder Arylenrest mit 6 bis 22 Kohlenstoffatomen,
**B, B'** eine reaktive oder nicht reaktive Endgruppe, welche kovalent an das Polymer gebunden ist,
**n** eine Zahl von 1 bis 4000,
**m** eine Zahl von 1 bis 4000,
**a** eine Zahl von mindestens 1,
**b** eine Zahl von 0 bis 40,
**c** eine Zahl von 0 bis 30 und
**d** eine Zahl größer 0 bedeuten,
in einem einstufigen Reaktionsverlauf polymerisiert wird.

2. Verfahren nach Anspruch 1, **dadurch gekennzeichnet, dass** die Silane der allgemeinen Formel (2) und die Silanol-Gruppen enthaltenden Edukte und Polyisocyanate in äquimolaren Verhältnissen eingesetzt werden.

3. Verfahren nach mindestens einem der Ansprüche 1 oder 2, **dadurch gekennzeichnet, dass** die Silane der allgemeinen Formel (2) lineare oder cyclische Verbindungen, niedermolekulare oder polymere Verbindungen, Alkoxysilane oder Silazane sind.

4. Verfahren nach mindestens einem der Ansprüche 1 bis 3, **dadurch gekennzeichnet, dass** die Silane der allgemeinen Formel (2) ausgewählt sind aus der Gruppe enthaltend:
H₃C-O-Si(CH₃)₂-CH₂-NH₂, H₃C-H₂C-O-Si(CH₃)₂-CH₂-NH₂ H₃C-O-Si(CH₃)₂-CH₂-NH(C₆H₁₁), H₃C-H₂C-O-Si(CH₃)₂-CH₂-NH(C₆H₁₁), H₃C-O-Si(CH₃)₂-(CH₂)₃-NH₂, H₃C-H₂C-O-Si(CH₃)₂-(CH₂)₃-NH₂, H₃C-O-Si(CH₃)₂-(CH₂)₃-NH(C₆H₁₁), H₃C-H₂C-O-Si(CH₃)₂-(CH₂)₃-NH(C₆H₁₁),

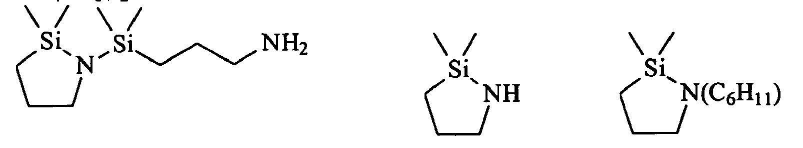

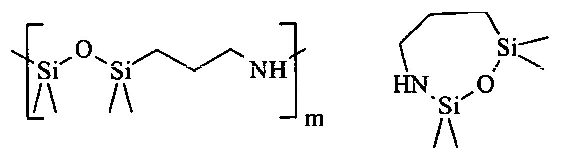

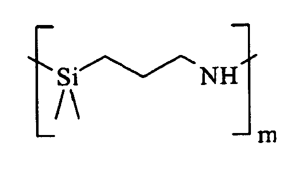

5. Verfahren nach mindestens einem der Ansprüche 1 bis 3, **dadurch gekennzeichnet, dass**, wenn **b** mindestens 1 ist, in einem zweiten Schritt bis zu 95 Gewichtsprozent, bezogen auf alle eingesetzten Komponenten, an Kettenverlängerern, die ausgewählt werden aus der Gruppe enthaltend Diamine, Isocyanat-geblockte Hydroxyverbindungen, Dihydroxyverbindungen oder Mischungen davon, eingesetzt werden.

6. Verfahren nach Anspruch 5, **dadurch gekennzeichnet, dass** die Kettenverlängerer die allgemeine Formel (6)
**HZ-D-ZH**
aufweisen, wobei
**D** einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, und
**Z** ein Sauerstoffatom oder eine Aminogruppe -NR'-
bedeuten.

7. Verfahren nach mindestens einem der Ansprüche 1 bis 6, **dadurch gekennzeichnet, dass** das Verfahren unter Ausschluss von Feuchtigkeit und unter Schutzgas, ausgewählt aus der Gruppe enthaltend Stickstoff und Argon, durchgeführt wird.

8. Verfahren nach mindestens einem der Ansprüche 1 bis 7, **dadurch gekennzeichnet, dass** ein Katalysator aus der Gruppe enthaltend Dialkylzinnverbindungen, Dibutylzinndilaurat, Dibutylzinndiacetat, tertiäre Amine, N,N-Dimethylcyclohexanamin, 2-Dimethylaminoethanol und 4-Dimethylaminopyridin zugesetzt wird.

9. Organopolysiloxan/Polyharnstoff/Polyurethan-Blockcopolymer der allgemeinen Formel [1] erhältlich nach dem Anspruch 4.

10. Verwendung der Organopolysiloxan/Polyharnstoff/Polyurethan-Blockcopolymeren der allgemeinen Formel (1) erhältlich nach mindestens einem Verfahren gemäß der Ansprüche 1 bis 9 als Bestandteil in Kleb- und Dichtstoffen, Zusatzstoffe in Polymerblends, biokompatible Materialien, Dichtstoffe, Additive für die Polymerverarbeitung, anti-fouling Überzüge, Kosmetika, Körperpflegemittel, Lackadditive, Hilfsstoff in Waschmitteln und Textilbearbeitung, oder in thermoplastischen Elastomeren für Kabelumhüllungen, Schläuche, Dichtungen, Tastaturmatten, oder für Membranen, selektiv gasdurchlässige Membranen, Beschichtungsanwendungen in Antihaftbeschichtungen, gewebeverträglichen Überzügen und flammgehemmten Überzügen und zum Modifizieren von Harzen oder zur Bitumenmodifizierung.

## Claims

1. Process for preparing organopolysiloxane/polyurea/polyurethane block copolymers of the general formula (1) : 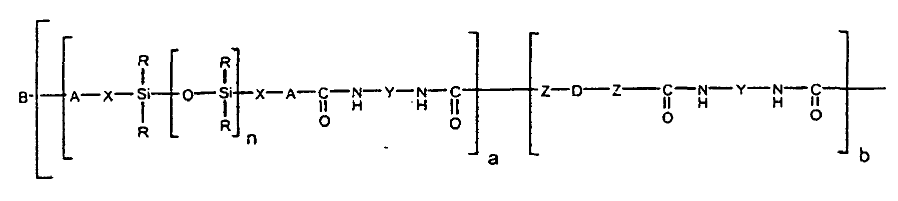 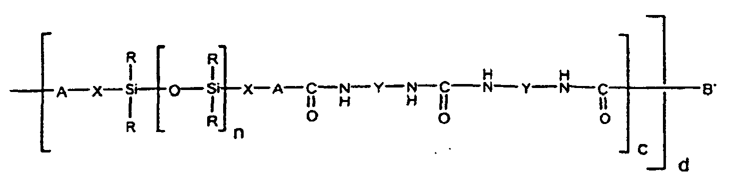 **characterized in that**
a compound containing an aminosilane structure of the general formula (2) : 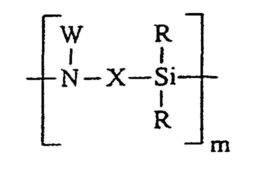 is polymerized with an organosilicon compound of the general formula (3)
(HO) (R₂SiO) ₙ₋₁ [H]
and at least one diisocyanate of the general formula (4)
OCN-Y-NCO,
where
R is a monovalent hydrocarbon radical optionally substituted by fluorine or chlorine and having 1 to 20 carbon atoms,
X is an alkylene radical having 1 to 20 carbon atoms, in which nonadjacent methylene units may have been replaced by -O- groups, or an arylene radical having 6 to 22 carbon atoms,
A is an oxygen atom or an amino group -NR'-,
Z is an oxygen atom or an amino group -NR'-,
R' is hydrogen, an alkyl radical having 1 to 10 carbon atoms
or [A] an aryl radical having 6 to 22 carbon atoms,
Y is a divalent hydrocarbon radical optionally substituted by fluorine or chlorine and having 1 to 20 carbon atoms,
W is hydrogen, a substituted or unsubstituted hydrocarbon radical or a radical R₂Si-X-NH₂,
D is an alkylene radical optionally substituted by fluorine, chlorine, C₁-C₆-alkyl or C₁-C₆-alkyl ester and having 1 to 700 carbon atoms, in which nonadjacent methylene units may have been replaced by -O-, -COO-, -OCO-, or -OCOO- groups, or an arylene radical having 6 to 22 carbon atoms,
B, B' are a reactive or nonreactive end group attached covalently to the polymer,
n is a number from 1 to 4000,
m is a number form 1 to 4000,
a is a number which is at least 1,
b is a number from 0 to 40,
c is a number from 0 to 30, and
d is a number greater than 0,
in a single-stage reaction.

2. Process according to Claim 1, **characterized in that** the silanes of the general formula (2) and the starting materials containing silanol groups, and polyisocyanate are used in equimolar proportions.

3. Process according to at least one of Claims 1 and 2, **characterized in that** the silanes of the general formula (2) are linear or cyclic compounds, low molecular mass or polymeric compounds, alkoxysilanes or silazanes.

4. Process according to at least one of Claims 1 to 3, **characterized in that** the silanes of the general formula (2) are selected from the group consisting of:
H₃C-O-Si(CH₃) ₂-CH₂-NH₂, H₃C-H₂C-O-Si(CH₃)₂-CH₂-NH₂ H₃C-O-Si(CH₃)₂-CH₂-NH(C₆H₁₁), H₃C-H₂C-O-Si(CH₃)₂-CH₂₋NH(C₆H₁₁), H₃C-O-Si(CH₃)₂-(CH₂)₃-NH₂, H₃C-H₂C-O-Si(CH₃)₂₋(CH₂)₃-NH₂, H₃C-O-Si(CH₃)₂-(CH₂)₃-NH(C₆H₁₁), H₃C-H₂C-O-Si (CH₃)₂-(CH₂) ₃-NH(C₆H₁₁),

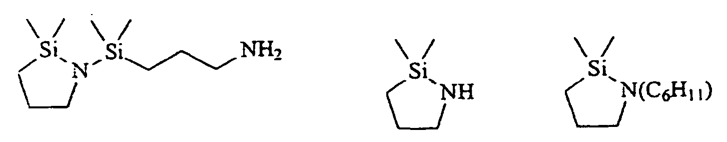

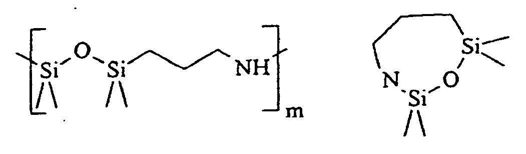

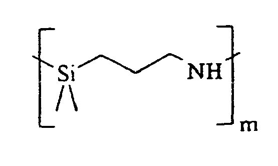

5. Process according to at least one of Claims 1 to 3, **characterized in that**, if b is at least 1, in a second step up to 95 per cent by weight, based on all of the components employed, of chain extenders selected from the group consisting of diamines, isocyanate-blocked hydroxy compounds, dihydroxy compounds or mixtures thereof are used.

6. Process according to Claim 5, **characterized in that** the chain extenders have the general formula (6)
HZ-D-ZH
where
D is an alkylene radical optionally substituted by fluorine, chlorine, C₁-C₆ alkyl or C₁-C₆ alkyl ester and having 1 to 700 carbon atoms, in which nonadjacent methylene units may have been replaced by -O-, -COO-, -OCO-, or -OCOO- groups, and
Z is an oxygen atom or an amino group -NR'-.

7. Process according to at least one of Claims 1 to 6, **characterized in that** the process is carried out with exclusion of moisture and under inert gas, selected from the group consisting of nitrogen and argon.

8. Process according to at least one of Claims 1 to 7, **characterized in that** a catalyst is added from the group consisting of dialkyltin compounds, dibutyltin dilaurate, dibutyltin diacetate, tertiary amines, N,N-dimethylcyclohexanamine, 2-dimethylaminoethanol, and 4-dimethylaminopyridine.

9. Organopolysiloxane/polyurea/polyurethane block copolymers of the general formula [1] obtainable according to Claim 4.

10. Use of the organopolysiloxane/polyurea/polyurethane block copolymers of the general formula (1) obtainable according to at least one process according to Claims 1 to 9 as a constituent in adhesives and sealants, additives in polymer blends, biocompatible materials, sealants, additives for polymer processing, antifouling coatings, cosmetics, bodycare products, paint additives, an auxiliary in laundry detergents and for treatment of textiles, or in thermoplastic elastomers for cable sheathing, hoses, seals, keyboard mats, or for membranes, selectively gas-permeable membranes, coating applications in nonstick coatings, tissue-compatible coatings, and flame-retarded coatings, and for modifying resins or for bitumen modification.

## Revendications

1. Procédé pour la préparation de copolymères à blocs d'organopolysiloxane/polyurée/polyuréthane de formule générale (1) : 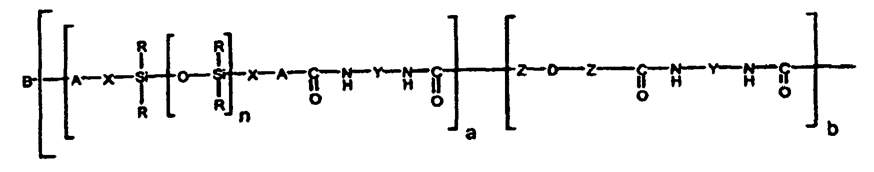 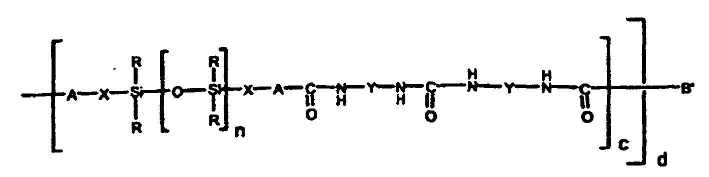 **caractérisé en ce qu'**un composé qui contient une structure aminosilane de formule générale (2) : 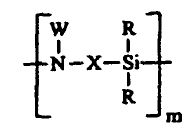 est polymérisé dans une réaction à une étape avec un composé organosilicié de formule générale (3),
(HO) (R₂SiO)ₙ₋₁[H]
et au moins un diisocyanate de formule générale (4)
OCN-Y-NCO
dans lesquelles
R signifie un radical hydrocarboné monovalent, le cas échéant substitué par fluor ou chlore, comprenant 1 à 20 atomes de carbone,
X signifie un radical alkylène comprenant 1 à 20 atomes de carbone, dans lequel des unités méthylène non adjacentes peuvent être remplacées par des groupements -O-, ou un radical arylène comprenant 6 à 22 atomes de carbone,
A signifie un atome d'oxygène ou un groupe amino -NR'-,
Z signifie un atome d'oxygène ou un groupement amino -NR'-,
R' signifie hydrogène, un radical alkyle comprenant 1 à 10 atomes de carbone ou un radical aryle comprenant 6 à 22 atomes de carbone,
Y signifie un radical hydrocarboné divalent, le cas échéant substitué par fluor ou chlore, comprenant 1 à 20 atomes de carbone,
W signifie hydrogène, un radical hydrocarboné substitué ou non substitué ou un radical R₂Si-X-NH₂,
D signifie un radical alkylène le cas échéant substitué par fluor, chlore, alkyle en C₁ à C₆ ou ester d'alkyle en C₁ à C₆, comprenant 1 à 700 atomes de carbone, dans lequel des unités méthylène non adjacentes peuvent être remplacées par des groupements -O-, -COO-, -OCO- ou - OCOO-, ou un radical arylène comprenant 6 à 22 atomes de carbone,
B, B' signifient un groupe terminal réactif ou non réactif qui est lié par covalence au polymère,
n signifie un nombre de 1 à 4000,
m signifie un nombre de 1 à 4000,
a signifie un nombre d'au moins 1,
b signifie un nombre de 0 à 40,
c signifie un nombre de 0 à 30 et
d signifie un nombre supérieur à 0.

2. Procédé selon la revendication 1, **caractérisé en ce que** les silanes de formule générale (2) et les produits de départ contenant les groupements silanol et les polyisocyanates sont utilisés dans des rapports équimolaires.

3. Procédé selon au moins la revendication 1 ou 2, **caractérisé en ce que** les silanes de formule générale (2) sont des composés linéaires ou cycliques, des composés de bas poids moléculaire ou polymères, des alcoxysilanes ou des silazanes.

4. Procédé selon au moins l'une quelconque des revendications 1 à 3, **caractérisé en ce que** les silanes de formule générale (2) sont choisis dans le groupe contenant :
H₃C-O-Si(CH₃)₂-CH₂-NH₂, H₃C-H₂C-O-Si(CH₃)₂-CH₂-NH₂, H₃C-O-Si(CH₃)₂-CH₆-NH(C₆H₁₁), H₃C-H₂C-O-Si(CH)₂-CH₂-NH(C₆H₁₁), H₃C-O-Si(CH₃)₂-(CH₂)₃-NH₂, H₃C-H₂C-O-Si(CH₃)₂-(CH₂)₃-NH₂, H₃C-O-Si(CH₃)₂-(CH₂)₃₋NH(C₆H₁₁), H₃C-H₂C-O-Si(CH₃)₂-(CH₂)₃-NH(C₆H₁₁),

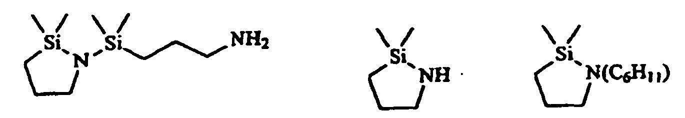

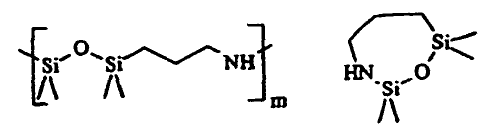

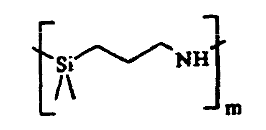

5. Procédé selon au moins l'une quelconque des revendications 1 à 3, **caractérisé en ce que**, lorsque b vaut au moins 1, on utilise dans une deuxième étape jusqu'à 95% en poids, par rapport à tous les composants utilisés, d'agents d'allongement de chaîne qui sont choisis dans le groupe contenant les diamines, les composés hydroxy et les composés dihydroxy bloqués par isocyanate ou des mélanges de ceux-ci.

6. Procédé selon la revendication 5, **caractérisé en ce que** les agents d'allongement de chaîne présentent la formule générale (6)
HZ-D-ZH
dans laquelle D signifie un radical alkylène le cas échéant substitué par fluor, chlore, alkyle en C₁ à C₆ ou ester d'alkyle en C₁ à C₆, comprenant 1 à 700 atomes de carbone, dans lequel des unités méthylène non adjacentes peuvent être remplacées par des groupements -O-, -COO-, -OCO- ou -OCOO- et
Z signifie un atome d'oxygène ou un groupement amino -NR'-.

7. Procédé selon au moins l'une quelconque des revendications 1 à 6, **caractérisé en ce que** le procédé est réalisé à l'abri de l'humidité et sous gaz protecteur, choisi dans le groupe contenant l'azote et l'argon.

8. Procédé selon au moins l'une quelconque des revendications 1 à 7, **caractérisé en ce qu'**on ajoute un catalyseur du groupe contenant les composés de dialkylétain, le dilaurate de dibutylétain, le diacétate de dibutylétain, les amines tertiaires, la N,N-diméthylcyclohexanamine, le 2-diméthylaminoéthanol et la 4-diméthylaminopyridine.

9. Copolymère à blocs d'organopolysiloxane/polyurée/polyuréthane de formule générale (1) pouvant être obtenu selon la revendication 4.

10. Utilisation des copolymères à blocs d'organopolysiloxane/polyurée/polyuréthane de formule générale (1), pouvant être obtenus selon au moins un procédé selon les revendications 1 à 9 comme constituant dans les masses adhésives et d'étanchéité, additifs dans les mélanges de polymères, matériaux biocompatibles, masses d'étanchéité, additifs pour la transformation de polymères, revêtements anti-salissures, cosmétiques, agents de soin corporel, additifs pour laque, adjuvant dans les agents de lavage et le traitement des textiles ou dans les élastomères thermoplastiques pour les gaines de câbles, flexibles, joints, tapis de clavier ou pour des membranes, des membranes sélectivement perméables au gaz, utilisations de revêtement dans les revêtements anti-adhésifs, revêtements compatibles avec les tissus et revêtements retardateurs de flamme et pour la modification de résines ou de bitume.
